(19) Europäisches Patentamt / European Patent Office / Office européen des brevets

(11) **EP 3 508 409 B1**

(12) **EUROPEAN PATENT SPECIFICATION**

(45) Date of publication and mention
of the grant of the patent:
**03.02.2021 Bulletin 2021/05**

(51) Int Cl.:
**B62K 21/08** *(2006.01)* **B62K 21/10** *(2006.01)*
**B62K 21/18** *(2006.01)* **B62K 25/08** *(2006.01)*
**B62J 45/41** *(2020.01)*

(21) Application number: **18248056.6**

(22) Date of filing: **27.12.2018**

(54) **MOTOR VEHICLE**

KRAFTFAHRZEUG

VÉHICULE À MOTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.01.2018 US 201862614012 P**

(43) Date of publication of application:
**10.07.2019 Bulletin 2019/28**

(73) Proprietor: **YAMAHA HATSUDOKI KABUSHIKI
KAISHA**
**Iwata-shi, Shizuoka 438-8501 (JP)**

(72) Inventors:
 • **UCHIYAMA, Toshifumi**
   **Cypress, CA 90630 (US)**
 • **LOW, Thomas P.**
   **Menlo Park, CA 94025 (US)**
 • **FOSTER, Brian W.**
   **Menlo Park, CA 94025-3453 (US)**
 • **ZHAO, Huihua**
   **Menlo Park, CA 94025 (US)**
 • **GAUDREAULT, Martin**
   **Menlo Park, CA 94025 (US)**

(74) Representative: **Grünecker Patent- und
Rechtsanwälte
PartG mbB
Leopoldstraße 4
80802 München (DE)**

(56) References cited:
**DE-A1-102012 101 277     DE-A1-102012 101 281
JP-A- 2005 349 927        US-A1- 2013 066 522
US-A1- 2014 114 546**

## Description

## BACKGROUND

### Field of the Invention

The present invention generally relates to a vehicle. More specifically, the present invention relates to a steering control of a vehicle.

### Background Information

In a straddle type vehicle, such as a motorcycle, a steering damper is used to reduce steering vibrations or kickbacks transmitted from a steerable wheel to a steering, for example. There are different types of steering dampers, such as hydraulic steering dampers, mechanical/electrical steering dampers. Specifically, hydraulic steering dampers have a hydraulic cylinder for attenuating the steering vibration via a hydraulic damping force of the hydraulic cylinder. On the other hand, mechanical/electrical steering dampers have a structure that attenuates the steering vibration without using a hydraulic damper. Specifically, a mechanical/electrical steering damper has a generator for attenuating the steering vibration via an electromagnetic force generated by driving the generator. On the other hand, another mechanical/electrical steering damper has a motor for attenuating the steering vibration via a driving torque generated by the motor. Documents US 2014/114546 A1, JP 2005 349927 A, US 2013/066522 A1, and DE 10 2012 101277 A1 relate to control methods of steering systems of vehicles. DE 10 2012 101281 A1 discloses a vehicle with a configuration according to the preamble of claim 1.

## SUMMARY

It has been discovered that it is likely that steering oscillations or large kickbacks occur when a load on a front wheel of a vehicle is suddenly increased. For example, a load on the front wheel of the vehicle can be reduced due to acceleration and/or air drag force while the vehicle is traveling. On the other hand, the load on the front wheel of the vehicle can be increased when the vehicle decelerates after the load of the front wheel of the vehicle is reduced. Specifically, the front wheel can come off a traveling surface of the ground (i.e., a wheelie) when sufficient torque is applied to a drive wheel of the vehicle, for example. When the front wheel comes to contact with the traveling surface of the ground again, then the load on the front wheel is suddenly increased, which can cause the steering oscillations or large kickbacks.

These steering oscillations or large kickbacks may be attenuated by increasing damping force of a steering damper of the vehicle. However, if the damping force is increased, then steering operability can be compromised since the damping force also affects steering operation of the steering. In order to increase the steering comfort, a motor vehicle with the features of claim 1 is provided. Preferred embodiments are laid down in the dependent claims. In the following description, the first prescribed threshold corresponds to a second prescribed threshold of the claims and vice versa.

Also, other features, aspects and advantages of the disclosed vehicle will become apparent to those skilled in the field of vehicles from the following detailed description, which, taken in conjunction with the annexed drawings, discloses several illustrative embodiments of a vehicle with various features.

## BRIEF DESCRIPTION OF THE DRAWINGS

Referring now to the attached drawings which form a part of this original disclosure:

Figure 1 is a left side elevational view of a vehicle in accordance with one embodiment;
Figure 2 illustrates a schematic diagram illustrating a front wheel steering mechanism of the vehicle illustrated in Figure 1;
Figure 3 illustrates a block diagram of an electronic configuration of vehicle illustrated in Figure 1;
Figure 4 illustrates a flowchart illustrating an outline of a steering control of the vehicle illustrated in Figure 1;
Figure 5 illustrates graphs illustrating timings for applying a steering damper torque, a steering operation torque and a steering adjustment torque in the steering control of the vehicle illustrated in Figure 1;
Figure 6 illustrates a flowchart illustrating a calculation of a second coefficient for the steering damper torque in the steering control illustrated in Figure 4;
Figure 7 illustrates a flowchart illustrating a calculation of a first coefficient for the steering operation torque in the steering control illustrated in Figure 4;
Figure 8 illustrates a flowchart illustrating a calculation of a third coefficient for the steering adjustment torque in the steering control illustrated in Figure 4;
Figure 9 illustrates simulation results of vehicle behaviors without the steering control in accordance with one embodiment;
Figure 10 illustrates simulation results of vehicle behaviors with the steering control in accordance with one embodiment;
Figure 11 illustrates a graph showing a prescribed steering angle based on a vehicle speed and a vehicle roll angle for the steering control of the vehicle illustrated in Figure 1;
Figure 12 illustrates a schematic diagram illustrating a front wheel steering mechanism of a vehicle in accordance with a modification example;
Figure 13 illustrates a block diagram of an electronic configuration of the vehicle illustrated in Figure 12;
Figure 14 illustrates a schematic diagram illustrating a front wheel steering mechanism of a vehicle in accordance with another modification example; and

Figure 15 illustrates a block diagram of an electronic configuration of the vehicle illustrated in Figure 14.

It should be noted that these figures are intended to illustrate the general characteristics of methods, structure and/or materials utilized in certain illustrative embodiments and to supplement the written description provided below. These drawings are not, however, to scale and may not precisely reflect the precise structural or performance characteristics of any given embodiment, and should not be interpreted as defining or limiting the range of values or properties encompassed by illustrative embodiments. The use of similar or identical reference numbers in the various drawings is intended to indicate the presence of a similar or identical element or feature.

**DETAILED DESCRIPTION OF EMBODIMENTS**

Selected embodiments will now be explained with reference to the drawings. It will be apparent to those skilled in the art from this disclosure that the following descriptions of the embodiments are provided for illustration only and not for the purpose of limiting the invention as defined by the appended claims. Like reference numerals in the drawings denote like similar or identical elements or features, and thus the descriptions of the similar or identical elements or features may be omitted in later embodiments.

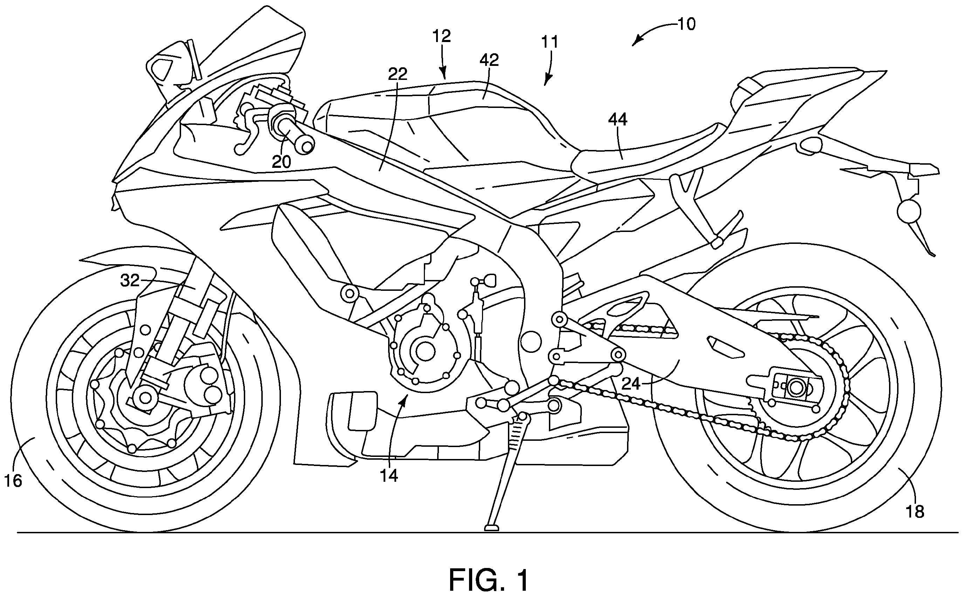

Referring initially to Figure 1, a vehicle 10 is illustrated that is configured to be operated by a steering control in accordance with one embodiment.

As shown in Figure 1, the vehicle 10 has a wheeled vehicle body 11 that is illustrated as a two-wheeled motorcycle or sport bike. However, the wheeled vehicle body 11 can be any other street or on-road type motorcycle. Also, the wheeled vehicle body 11 is not limited to the on-road type motorcycles, and can be of, for example, a so-called scooter type, a moped type, an off-road type, and the like. Also, the wheeled vehicle body 11 is not limited to the two-wheeled motorcycle, and can be a motorized tricycle, such as a delta trike or a tadpole trike. Also, the wheeled vehicle body 11 is not limited to motorcycles, and can be any other straddle type vehicles, in which a driver (rider) rides astride, such as an ATV (All Terrain Vehicle), a four-wheel buggy and the like, or any other type of motor vehicles.

In the following description, the terms "front" and "forward" refer to a direction in which a driver looks straight ahead when seated on the seat. Also in the following description, the terms "rear," "rearward" and "backward" refer to a direction opposite to the front or forward direction. Also, the term "left" refer to a direction towards the left side of a driver while the driver looks straight ahead when seated on the seat. Furthermore, the term "right" refers to a direction opposite to the left direction.

As illustrated in Figure 1, the wheeled vehicle body 11 basically includes a main body 12, a drive unit 14, a front wheel 16, a rear wheel 18 and a handlebar 20 (e.g., a steering). The main body 12 has a body frame 22 and a swing arm 24. The body frame 22 forms a framework of the wheeled vehicle body 11, and carries the drive unit 14 in a conventional manner. The swing arm 24 is pivotally coupled to the body frame 22 at a rear end thereof. The swing arm 24 rotatably supports the rear wheel 18 at a rear end portion thereof. In the illustrated embodiment, the front wheel 16 is a steerable wheel of the vehicle 10 (e.g., a single steerable front wheel), while the rear wheel 18 is a drive wheel of the vehicle 10 that is driven by the drive unit 14. With this configuration the vehicle 10 travels on a traveling surface of a ground GD.

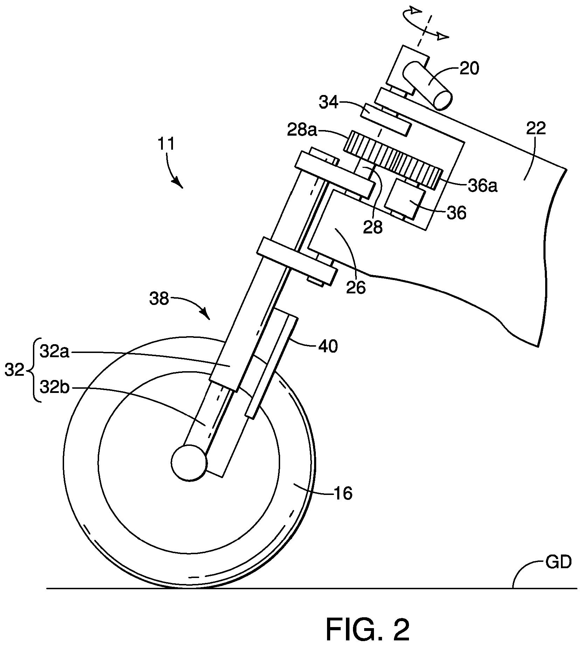

As illustrated in Figure 2, the body frame 22 also has a head tube 26 at a front end thereof. The head tube 26 rotatably supports a steering shaft 28 and a front fork 32. The front fork 32 is coupled to the steering shaft 28. The front fork 32 rotatably supports the front wheel 16 in a conventional manner. Thus, the front wheel 16 is mounted to the main body 12 via the front fork 32.

As further illustrated in Figure 2, the handlebar 20 is turnably coupled to an upper portion of the body frame 22 of the main body 12 to steer the front wheel 16. In the illustrated embodiment, the handlebar 20 is mechanically decoupled from the steering shaft 28. Thus, in the illustrated embodiment, a rotational operation (e.g., a steering operation) of the handlebar 20 is not directly transmitted to the steering shaft 28 from the handlebar 20. Instead, the wheeled vehicle body 11 has a steering sensor 34 and a steering actuator 36. The steering sensor 34 detects the steering operation of the handlebar 20. The steering actuator 36 rotates the steering shaft 28 to steer the front wheel 16 according to the detected steering operation of the handlebar 20 detected by the steering sensor 34. Thus, the steering actuator 36 is configured to control a steering torque applied to the front wheel 16 to change a steering angle of the front wheel 16.

Specifically, in the illustrated embodiment, the steering sensor 34 includes a steering angle sensor, such as a rotary encoder, that measures a rotational angle of a handlebar shaft of the handlebar 20 (i.e., a steering angle of the handlebar 20). Of course, the steering sensor 34 can further include different type of sensors that detect steering operation of the handlebar 20. For example, in the illustrated embodiment, the steering sensor 34 can further include a steering torque sensor that detects a rotational torque applied to the handlebar 20 (i.e., a steering torque of the handlebar 20). The steering actuator 36 includes a servomotor. The steering actuator 36 generates a rotational torque to steer the front wheel 16 (i.e., a steering torque of the steering actuator 36) according to the steering angle and/or the steering torque of the handlebar 20. Specifically, the steering actuator 36 is fixedly coupled to the body frame 22 in a conventional manner, and rotates an output gear 36a of the steering actuator 36. The output gear 36a of the steering actuator 36 is meshed with an input gear 28a of the steering shaft 28 to transmit the steering torque of the steering actuator 36 to the steering shaft 28, which steers the front wheel 16. Of course, in the illustrated embodiment, the wheeled vehicle body 11 can further include a steering force actuator that generates appropriate steering force feedback (or steering reaction force) to the handlebar 20 for transmitting the reaction force from the traveling surface of the ground GD to the handlebar 20. In particular, the steering force actuator can be located at the steering sensor 34, and can generate the steering force feedback to the handlebar 20 according to the steering torque applied to the steering shaft 28 and/or the steering angle of the front wheel 16. Furthermore, in the illustrated embodiment, the wheeled vehicle body 11 can further include a steering sensor that detects a rotational angle of the steering shaft 28 (i.e., a steering angle of the steering shaft 28) and/or a rotational torque applied to the steering shaft 28 (i.e., a steering torque of the steering shaft 28).

As illustrated in Figure 2, the front fork 32 is a telescopic fork, and includes a pair of fork tubes 32a and 32b that contains a suspension component 38, such as a coil spring, a damper and the like, internally to form a suspension of the wheeled vehicle body 11. Thus, the front wheel 16 is coupled to the main body 12 via the suspension. In the illustrated embodiment, the wheeled vehicle body 11 further includes a suspension stroke sensor 40, such as a linear encoder, that measures a suspension stroke of the front fork 32. Specifically, the suspension stroke sensor 40 is coupled between the fork tubes 32a and 32b, and measures a relative positional deviation between the fork tubes 32a and 32b as the suspension stroke of the front fork 32, for example. Of course, the front fork 32 can be any other type of motorcycle forks as needed and/or desired. Also, the suspension stroke sensor 40 can be any other type of stroke sensors as needed and/or desired.

As illustrated in Figure 1, the wheeled vehicle body 11 also includes a fuel tank 42 and a seat 44. The fuel tank 42 is located on the body frame 22. The seat 44 is also located on the body frame 22 rearward of the fuel tank 42. The seat 44 is a straddle seat or saddle on which a driver can ride astride.

Of course, the wheeled vehicle body 11 can further include many other conventional vehicle components that are typically provided on motorcycles. For example, the wheeled vehicle body 11 can further include an accelerator, a brake lever, a clutch lever, a brake pedal and a shift pedal, for example. Furthermore, the drive unit 14 of the wheeled vehicle body 11 can further include an engine, a clutch and a transmission mechanism with a plurality of gear stages, for example. However, for the sake of brevity, only those vehicle components needed to understand the present invention will be illustrated and/or discussed herein.

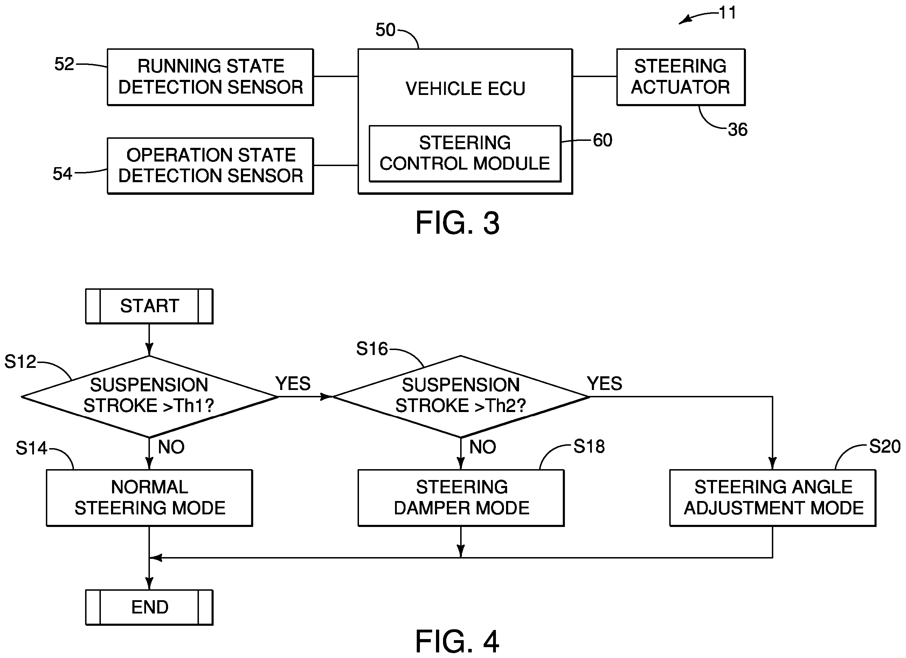

As illustrated in Figure 3, the wheeled vehicle body 11 includes a vehicle ECU (Electronic Control Unit) 50 as an electronic controller for controlling various components of the vehicle 10. Specifically, as understood in the motorcycle field, the vehicle ECU 50 includes a microcomputer having one or more processors that execute one or more control programs for controlling the vehicle 10. The vehicle ECU 50 can also include other conventional components such as an input interface circuit, an output interface circuit, and data/program storage devices such as a ROM (Read Only Memory) device and a RAM (Random Access Memory) device. The RAM and ROM store processing results and control programs that are run by the processor(s) of the vehicle ECU 50. The vehicle ECU 50 is operatively coupled to the components of the vehicle 10 as appropriate, in a conventional manner. It will be apparent to those skilled in the art from this disclosure that the precise structure and algorithms for the vehicle ECU 50 can be any combination of hardware and software that will carry out the functions of the present invention.

As illustrated in Figure 3, the vehicle ECU 50 is electrically coupled to various sensors that detect various states of the vehicle 10. In particular, the sensors include a running state detection sensor 52 and an operation state detection sensor 54.

The running state detection sensor 52 includes sensors that detect various vehicle running states of the vehicle 10. For example, in the illustrated embodiment, the running state detection sensor 52 includes the suspension stroke sensor 40. The suspension stroke sensor 40 is arranged to detect the suspension stroke of the front fork 32, and outputs signal indicative of the suspension stroke of the front fork 32 to the vehicle ECU 50.

Furthermore, the running state detection sensor 52 can also include at least one of a vehicle speed sensor, an acceleration sensor, a gyroscope, and the like. The vehicle speed sensor is arranged to detect a vehicle speed in a conventional manner. For example, the vehicle speed sensor detects a rotational speed of the rear wheel 18, and outputs a signal indicative of a vehicle speed of the vehicle 10 to the vehicle ECU 50. The acceleration sensor is arranged to detect acceleration of the vehicle 10 in the forward-backward, up-down and right-left directions, and outputs signal indicative of the acceleration of the vehicle 10 to the vehicle ECU 50 in a conventional manner. The gyroscope is arranged to detect angular velocity in the pitch, roll and yaw directions, and outputs signal indicative of the angular velocity to the vehicle ECU 50 in a conventional manner. In the illustrated embodiment, the acceleration sensor and the gyroscope can be packaged as a unit, such as an IMU (Inertial Measurement Unit). Of course, the running state detection sensor 52 can further include many other conventional vehicle sensors that are typically provided on motorcycles, such as sensors to detect various running states of the engine, the clutch, the transmission mechanism, and the like. However, for the sake of brevity, only those sensors needed to understand the present invention will be illustrated and/or discussed herein.

In the illustrated embodiment, the pitch direction is a rotational direction about the right-left direction, the roll direction is a rotational direction about the forward-backward direction, and the yaw direction is a rotational direction about the up-down direction. In the illustrated embodiment, the forward direction is a positive direction along the forward-backward direction, the upward direction is a positive direction along the up-down direction, and the rightward direction is a positive direction along the right-left direction, for example. Also, the positive directions of the pitch, roll and yaw directions are determined using the right-hand rule, for example.

On the other hand, the operation state detection sensor 54 includes sensors that detect various vehicle operation states of the vehicle 10. For example, the operation state detection sensor 54 includes the steering sensor 34. The steering sensor 34 is arranged to detect the steering angle and/or the steering torque of the handlebar 20, and outputs signal indicative of the steering angle and/or the steering torque of the handlebar 20 to the vehicle ECU 50.

Furthermore, the operation state detection sensor 54 can further include many other conventional vehicle sensors that are typically provided on motorcycles, such as sensors to detect various operation states of the accelerator, the brake lever, the clutch lever, the brake pedal, the shift pedal, and the like. However, for the sake of brevity, only those sensors needed to understand the present invention will be illustrated and/or discussed herein.

With this configuration, as illustrated in Figures 2 and 3, the wheeled vehicle body 11 can include a ride-by-wire or steer-by-wire system at least in regards to a steering control of the vehicle 10. Specifically, the vehicle ECU 50 includes a steering control module 60 that performs the steering control of the vehicle 10 using the steering actuator 36. Specifically, the steering control module 60 calculates a steering torque applied to the steering shaft 28 by the steering actuator 36 (i.e., a steering torque of the steering actuator 36) based on the steering angle and/or the steering torque of the handlebar 20 detected by the steering sensor 34. Then, the steering control module 60 outputs control signal to the steering actuator 36 to generate the steering torque. In other words, with this configuration, the wheeled vehicle body 11 also includes a power steering system or a steering power assist system.

Referring now to Figures 4-8, the steering control of the vehicle 10 will be described in detail.

Specifically, the steering control module 60 determines whether the vehicle 10 is traveling under a condition in which steering oscillations might occur. In the illustrated embodiment, the steering control module 60 determines that the vehicle 10 is traveling under the condition in which steering oscillations might occur upon determining a reduced contact (a reduced load) of the front wheel 16 with the traveling surface of the ground GD. Furthermore, in the illustrated embodiment, the steering control module 60 determines the reduced contact of the front wheel 16 with the traveling surface of the ground GD based on the suspension stroke of the front fork 32 detected by the suspension stroke sensor 40. Basically, the detected suspension stroke of the front fork 32 detected by the suspension stroke sensor 40 becomes larger (i.e., expanded state of the suspension) as the contact load of the front wheel 16 with the traveling surface of the ground GD becomes smaller. On the other hand, the detected suspension stroke of the front fork 32 becomes smaller (i.e., contracted state of the suspension) as the contact load of the front wheel 16 with the traveling surface of the ground GD becomes larger. Of course, the reduced contact of the front wheel 16 with the traveling surface of the ground GD can be determined by any other sensors, such as a suspension pressure sensor, the IMU, and the like, by using mathematical models, or by using different logics or algorisms that are different from a logic or algorism used in the steering control module 60. For example, the reduced contact of the front wheel 16 with the traveling surface of the ground GD can be determined by using the angular velocity and the angle in the pitch direction (i.e., pitch rate and pitch angle). In particular, with the pitch rate and the pitch angle obtained from the IMU, the contact of the front wheel 16 with the traveling surface of the ground GD can be determined.

As illustrated in Figure 4, if the detected suspension stroke is not larger than a first prescribed threshold Th1 (No in step S12), then the vehicle 10 is operated under a normal steering mode (step S14). In the normal steering mode, the steering control module 60 operates the steering actuator 36 to perform a power steering control or a steering power assist control. Specifically, in the normal steering mode, the steering control module 60 operates the steering actuator 36 to generate a steering operation torque τn. In the illustrated embodiment, the first prescribed threshold Th1 is set to 100 (mm), for example. However, the first prescribed threshold Th1 is not limited to this, and can be a different value as needed and/or desired. Of course, the first prescribed threshold Th1 can be a different value when the reduced contact of the front wheel 16 with the traveling surface of the ground GD is determined by a sensor other than the suspension stroke sensor 40, by using mathematical models, or by using different logics or algorisms that are different from a logic or algorism used in the steering control module 60.

The steering operation torque τn is a steering torque required to steer the front wheel 16 according to the steering angle and/or the steering torque of the handlebar 20 detected by the steering sensor 34. For example, the steering operation torque τn can be calculated as an amplified assistive torque based on the steering torque of the handlebar 20. Thus, in the normal steering mode, the steering control module 60 operates the steering actuator 36 to generate the steering operation torque τn for steering the front wheel 16. Specifically, the steering actuator 36 generates the steering operation torque τn according to the steering torque of the handlebar 20, thereby steering the front wheel 16 to an angular position (i.e., a steering angle of the front wheel 16) that corresponds to indicated by the steering angle of the handlebar 20. The calculation of this steering operation torque τn can be performed in a conventional manner as understood in the motorcycle field. Thus, in the illustrated embodiment, the vehicle ECU 50 is configured to generate the steering operation torque τn to the front wheel 16 using the steering actuator 36 based on the steering operation of the handlebar 20.

As further illustrated in Figure 4, if the detected suspension stroke is larger than the first prescribed threshold Th1 (Yes in step S 12), but is not larger than a second prescribed threshold Th2 that is larger than the first prescribed threshold Th1 (No in step S16), then the vehicle 10 is operated under a steering damper mode (step S18). In this case, the vehicle 10 is traveling under the condition in which the steering oscillations might occur due to the reduced contact of the front wheel 16 with the traveling surface of the ground GD. Thus, in the steering damper mode, the steering control module 60 operates the steering actuator 36 to further generate a steering damper torque τd in addition to the steering operation torque rn. In the illustrated embodiment, the second prescribed threshold Th2 is set to 115 (mm), for example. However, the second prescribed threshold Th2 is not limited to this, and can be a different value as needed and/or desired. Of course, the second prescribed threshold Th2 can be a different value when the reduced contact of the front wheel 16 with the traveling surface of the ground GD is determined by a sensor other than the suspension stroke sensor 40, by using mathematical models, or by using different logics or algorisms that are different from a logic or algorism used in the steering control module 60.

The steering damper torque τd is a steering torque for actively attenuating the steering oscillations or kickbacks. In particular, in the illustrated embodiment, the steering damper torque τd is calculated as follows:

$$\tau d = Kd \cdot d\delta/dt$$

where Kd represents a damping coefficient, and dδ/dt represents a steering rate, which is a time derivative of a detected steering angle δ of the steering shaft 28 detected by the steering sensor that detects the rotational angle of the steering shaft 28. The damping coefficient Kd is a prescribed constant determined based on a mathematical model of the vehicle 10 or an experiment, as understood in the motorcycle field. Of course, the steering angle δ can be obtained from the steering sensor 34 while the handlebar 20 integrally or synchronously rotates with the steering shaft 28.

As further illustrated in Figure 4, if the detected suspension stroke is larger than the first prescribed threshold Th1 (Yes in step S12), and is larger than the second prescribed threshold Th2 (Yes in step S16), then the vehicle 10 is operated under a steering angle adjustment mode (step S20). In this case, the vehicle 10 is traveling under the condition in which the steering oscillations might occur due to a further reduced contact of the front wheel 16 with the traveling surface of the ground GD. Thus, in the steering angle adjustment mode, the steering control module 60 operates the steering actuator 36 to further generate a steering adjustment torque τn in addition to the steering damper torque τd while canceling the generation of the steering operation torque rn.

The steering adjustment torque τc is a steering torque for controlling the steering angle of the front wheel 16 to a prescribed steering angle δc. In particular, in the illustrated embodiment, the steering adjustment torque τc is calculated as follows:

$$\tau c = Kp \cdot \delta e + Ki \cdot \int \delta e \, dt$$

where Kp represents a proportional gain for PI control, Ki represents an integral gain for PI control, and δe is an angular error between the prescribed steering angle δc and the detected steering angle δ of the steering shaft 28 (i.e., δe = δc - δ). The proportional gain Kp and the integral gain Ki are prescribed constants determined based on a mathematical model of the vehicle 10 or an experiment, as understood in the motorcycle field. With this configuration, the steering adjustment torque τc is calculated using PI control. However, the steering adjustment torque τc can be calculated in a different manner, as understood in the motorcycle field. Furthermore, in the illustrated embodiment, the prescribed steering angle δc has a fixed value. In particular, in the illustrated embodiment, the prescribed steering angle δc is set to be zero (0 degree). Thus, in the steering angle adjustment mode, the front wheel 16 is controlled to be parallel to the forward-backward direction of the vehicle 10. Of course, the prescribed steering angle δc can be set to a different value.

Thus, in the illustrated embodiment, the vehicle ECU 50 is configured to control the steering angle of the front wheel 16 using the steering actuator 36. Also, the vehicle ECU 50 is configured to generate the steering damper torque τd to the front wheel 16 using the steering actuator 36 upon determining a reduced contact of the front wheel 16 with the traveling surface of the ground GD with respect to the first prescribed threshold Th1 (Yes in step S12). Furthermore, the vehicle ECU 50 is configured to control the steering angle of the front wheel 16 to the prescribed steering angle δc using the steering actuator 36 upon determining a reduced contact of the front wheel 16 with the traveling surface of the ground GD with respect to the second prescribed threshold Th2 (Yes in step S16).

Also, in the illustrated embodiment, the second prescribed threshold Th2 is indicative of less contact of the front wheel 16 with the traveling surface of the ground GD with respect to the first prescribed threshold Th1. Specifically, in the illustrated embodiment, the first prescribed threshold Th1 is less than the second prescribed threshold Th2.

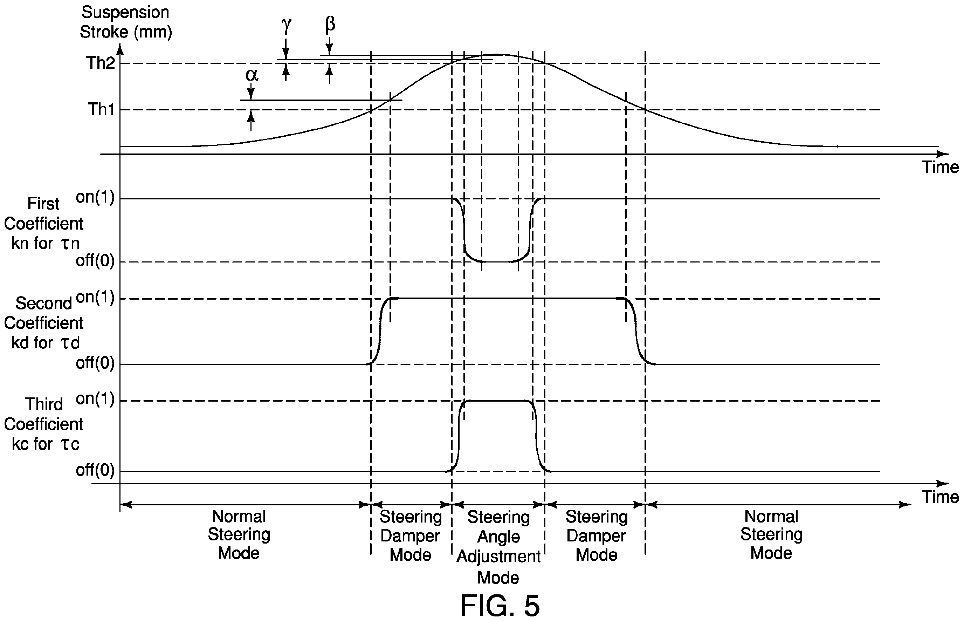

Referring now to Figures 5-8, the calculation of a steering torque $\tau s$ that is applied to the steering shaft 28 by the steering actuator 36 will be described in detail. The steering control module 60 calculates the steering torque $\tau s$ at a prescribed interval based on the steering operation torque $\tau n$, the steering damper torque $\tau d$ and the steering adjustment torque $\tau c$ with the following equation (1):

$$\tau s = kn \cdot \tau n + kd \cdot \tau d + kc \cdot \tau c \qquad (1)$$

where kn, kd and kc represent a weight coefficient for each torque, and have a value between 0 and 1 (i.e., $0 \leq kn \leq 1$, $0 \leq kd \leq 1$, and $0 \leq kc \leq 1$). In the illustrated embodiment, kn, kd and kc are referred to as first, second and third coefficients, respectively. Specifically, the first coefficient kn is a weight coefficient for the steering operation torque $\tau n$, the second coefficient kd is a weight coefficient for the steering damper torque $\tau d$, and the third coefficient kc is a weight coefficient for the steering adjustment torque $\tau c$.

In the illustrated embodiment, the steering control module 60 performs calculations of the first, second and third coefficient kn, kd and kc in parallel to calculations of the steering operation torque $\tau n$, the steering damper torque $\tau d$ and the steering adjustment torque $\tau c$ to calculate the steering torque $\tau s$ with the equation (1) at a prescribed interval.

As illustrated in Figure 5, if the detected suspension stroke is not larger than the first prescribed threshold Th1 (i.e., the normal steering mode), then the first coefficient kn is set to 1 while the second and third coefficients kd and kc are set to 0. Thus, in the normal steering mode, the steering actuator 36 is controlled to generate the steering operation torque $\tau n$ as the steering torque $\tau s$ (i.e., $\tau s = \tau n$).

As also illustrated in Figure 5, if the detected suspension stroke is larger than the first prescribed threshold Th1, but is not larger than the second prescribed threshold Th2 (i.e., the steering damper mode), then the first and second coefficients kn and kd are set to 1 while the third coefficient kc is set to 0. Thus, in the steering damper mode, the steering actuator 36 is controlled to generate the sum of the steering operation torque $\tau n$ and the steering damper torque $\tau d$ as the steering torque $\tau s$ (i.e., $\tau s = \tau n + \tau d$).

Specifically, in the illustrated embodiment, as illustrated in Figure 5, when the detected suspension stroke becomes larger than the first prescribed threshold Th1, the second coefficient kd is gradually increased to 1 such that the influence of the steering damper torque $\tau d$ in the steering torque $\tau s$ is gradually increased. On the other hand, the second coefficient kd is gradually decreased to 0 such that the influence of the steering damper torque $\tau d$ in the steering torque $\tau s$ is gradually decreased and is canceled when the detected suspension stroke becomes smaller than the first prescribed threshold Th1.

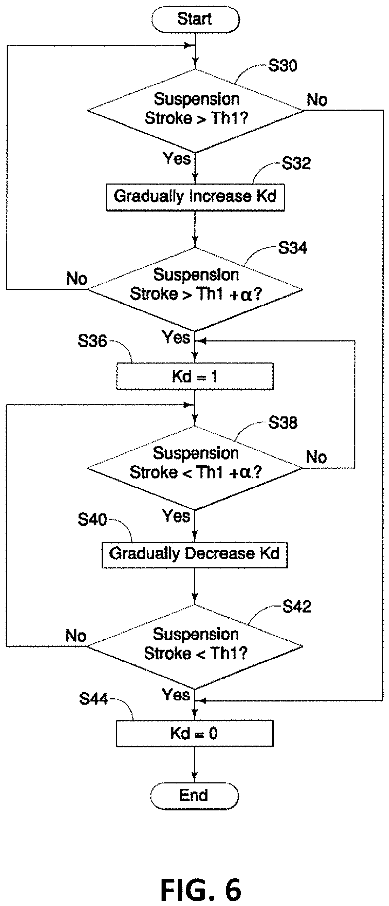

More specifically, referring now to Figure 6, the calculation of the second coefficient kd performed by the steering control module 60 will be further described in detail.

As illustrated in Figure 6, the steering control module 60 determines whether the detected suspension stroke is larger than the first prescribed threshold Th1 (step S30). If the steering control module 60 determines that the detected suspension stroke is not larger than the first prescribed threshold Th1 (No in step S30), then the steering control module 60 sets the second coefficient kd to 0, and calculates the steering torque $\tau s$ with equation (1) using the second coefficient kd (i.e., kd = 0) at the prescribed interval (step S44).

If the steering control module 60 determines that the detected suspension stroke is larger than the first prescribed threshold Th1 (Yes in step S30), then the steering control module 60 gradually increases the second coefficient kd to 1, and calculates the steering torque $\tau s$ with equation (1) using the second coefficient kd at the prescribed interval (step S32). The steering control module 60 further determines whether the detected suspension stroke is larger than the sum of the first prescribed threshold Th1 and a prescribed margin $\alpha$ (i.e., Th1+$\alpha$) (step S34). In the illustrated embodiment, the prescribed margin $\alpha$ is set to 3 (mm), for example. However, the prescribed margin $\alpha$ is not limited to this, and can be a different value as needed and/or desired. If the steering control module 60 determines that the detected suspension stroke is not larger than Th1+$\alpha$ (No in step S34), then the process returns to step S30. If the steering control module 60 determines that the detected suspension stroke is larger than Th1+$\alpha$ (Yes in step S34), then the steering control module 60 sets the second coefficient kd to 1, and calculates the steering torque $\tau s$ with equation (1) using the second coefficient kd (i.e., kd = 1) at the prescribed interval (step S36).

The steering control module 60 further determines whether the detected suspension stroke is smaller than Th1+$\alpha$ (step S38). If the steering control module 60 determines that the detected suspension stroke is not smaller than Th1+$\alpha$ (No in step S38), then the process returns to step S36. If the steering control module 60 determines that the detected suspension stroke is smaller than Th1+$\alpha$ (Yes in step S38), then the steering control module 60 gradually decreases the second coefficient kd to 0, and calculates the steering torque $\tau s$ with equation (1) using the second coefficient kd at the prescribed interval (step S40).

The steering control module 60 further determines whether the detected suspension stroke is smaller than the first prescribed threshold Th1 (step S42). If the steering control module 60 determines that the detected suspension stroke is not smaller than the first prescribed threshold Th1 (No in step S42), then the process returns to step S38. If the steering control module 60 determines that the detected suspension stroke is smaller than the first prescribed threshold Th1 (Yes in step S42), then the steering control module 60 sets the second coefficient kd to 0, and calculates the steering torque $\tau s$ with equation (1) using the second coefficient kd (i.e., kd = 1) at the prescribed interval (step S44).

As also illustrated in Figure 5, if the detected suspension stroke is larger than the second prescribed threshold Th2 (i.e., the steering angle adjustment mode), then the first coefficient kn is set to 0 while the second and third coefficients kd and kc are set to 1. Thus, in the steering angle adjustment mode, the steering actuator 36 is controlled to generate the sum of the steering damper torque $\tau d$ and the steering adjustment torque $\tau c$ as the steering torque $\tau s$ (i.e., $\tau s = \tau d + \tau c$).

Specifically, in the illustrated embodiment, as illustrated in Figure 5, when the detected suspension stroke becomes larger than the second prescribed threshold Th2, the third coefficient kc is gradually increased to 1 such that the influence of the steering adjustment torque $\tau c$ in the steering torque $\tau s$ is gradually increased. Also, when the detected suspension stroke becomes larger than the second prescribed threshold Th2, the first coefficient kn is gradually decreased to 0 such that the influence of the steering operation torque $\tau n$ in the steering torque $\tau s$ is gradually decreased and is canceled. On the other hand, the third coefficient kc is gradually decreased to 0 such that the influence of the steering adjustment torque $\tau c$ in the steering torque $\tau s$ is gradually decreased and is canceled when the detected suspension stroke becomes smaller than the second prescribed threshold Th2. Also, the first coefficient kn is gradually increased to 1 such that the influence of the steering operation torque $\tau n$ in the steering torque $\tau s$ is gradually increased by the timing when the detected suspension stroke becomes smaller than the second prescribed threshold Th2.

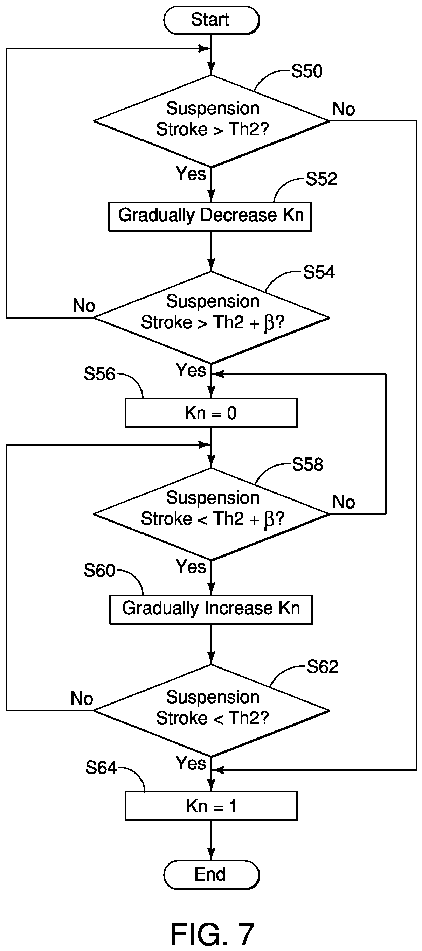

More specifically, referring now to Figure 7, the calculation of the first coefficient kn performed by the steering control module 60 will be further described in detail.

As illustrated in Figure 7, the steering control module 60 determines whether the detected suspension stroke is larger than the second prescribed threshold Th2 (step S50). If the steering control module 60 determines that the detected suspension stroke is not larger than the second prescribed threshold Th2 (No in step S50), then the steering control module 60 sets the first coefficient kn to 1, and calculates the steering torque $\tau s$ with equation (1) using the first coefficient kn (i.e., kn = 1) at the prescribed interval (step S64).

If the steering control module 60 determines that the detected suspension stroke is larger than the second prescribed threshold Th2 (Yes in step S50), then the steering control module 60 gradually decreases the first coefficient kn to 0, and calculates the steering torque $\tau s$ with equation (1) using the first coefficient kn at the prescribed interval (step S52). The steering control module 60 further determines whether the detected suspension stroke is larger than the sum of the second prescribed threshold Th2 and a prescribed margin $\beta$ (i.e., Th2+$\beta$) (step S54). In the illustrated embodiment, the prescribed margin $\beta$ is set to 3 (mm), for example. However, the prescribed margin $\beta$ is not limited to this, and can be a different value as needed and/or desired. If the steering control module 60 determines that the detected suspension stroke is not larger than Th2+$\beta$ (No in step S54), then the process returns to step S50. If the steering control module 60 determines that the detected suspension stroke is larger than Th2+$\beta$ (Yes in step S54), then the steering control module 60 sets the first coefficient kn to 0, and calculates the steering torque $\tau s$ with equation (1) using the first coefficient kn (i.e., kn = 0) at the prescribed interval (step S56).

The steering control module 60 further determines whether the detected suspension stroke is smaller than Th2+$\beta$ (step S58). If the steering control module 60 determines that the detected suspension stroke is not smaller than Th2+$\beta$ (No in step S58), then the process returns to step S56. If the steering control module 60 determines that the detected suspension stroke is smaller than Th2+$\beta$ (Yes in step S58), then the steering control module 60 gradually increases the first coefficient kn, to 1 and calculates the steering torque $\tau s$ with equation (1) using the first coefficient kn at the prescribed interval (step S60).

The steering control module 60 further determines whether the detected suspension stroke is smaller than the second prescribed threshold Th2 (step S62). If the steering control module 60 determines that the detected suspension stroke is not smaller than the second prescribed threshold Th2 (No in step S62), then the process returns to step S58. If the steering control module 60 determines that the detected suspension stroke is smaller than the second prescribed threshold Th2 (Yes in step S62), then the steering control module 60 sets the first coefficient kn to 1, and calculates the steering torque $\tau s$ with equation (1) using the first coefficient kn (i.e., kn = 1) at the prescribed interval (step S64).

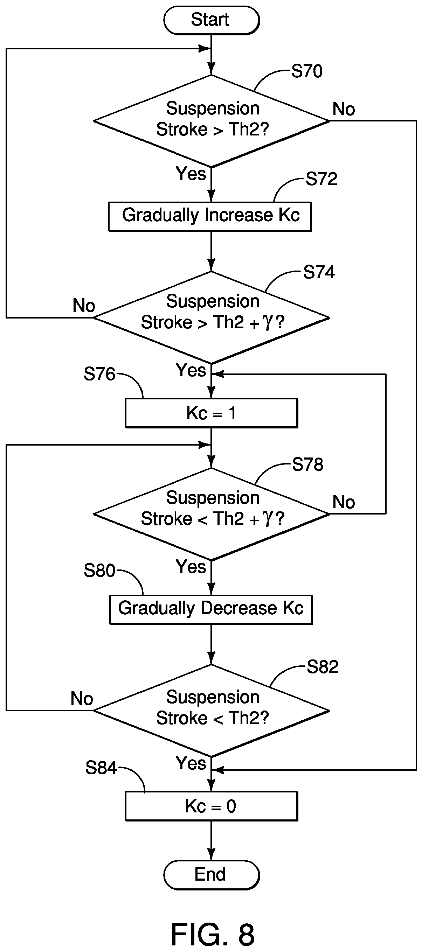

Furthermore, referring now to Figure 8, the calculation of the third coefficient kc performed by the steering control module 60 will be further described in detail.

As illustrated in Figure 8, the steering control module 60 determines whether the detected suspension stroke is larger than the second prescribed threshold Th2 (step S70). If the steering control module 60 determines that the detected suspension stroke is not larger than the second prescribed threshold Th2 (No in step S70), then the steering control module 60 sets the third coefficient kc to 0, and calculates the steering torque $\tau s$ with equation (1) using the third coefficient kc (i.e., kc = 0) at the prescribed interval (step S84).

If the steering control module 60 determines that the detected suspension stroke is larger than the second prescribed threshold Th2 (Yes in step S70), then the steering control module 60 gradually increases the third coefficient kc to 1, and calculates the steering torque τs with equation (1) using the third coefficient kc at the prescribed interval (step S72). The steering control module 60 further determines whether the detected suspension stroke is larger than the sum of the second prescribed threshold Th2 and a prescribed margin γ (i.e., Th2+γ) (step S74). In the illustrated embodiment, the prescribed margin γ is set to 2 (mm), for example. However, the prescribed margin γ is not limited to this, and can be a different value as needed and/or desired. Specifically, in the illustrated embodiment, the prescribed margins β and γ have different values. However, the prescribed margins β and γ can have the same value. Furthermore, in the illustrated embodiment, the prescribed margin γ is smaller than the prescribed margin β. However, the prescribed margin γ can be larger than the prescribed margin β. If the steering control module 60 determines that the detected suspension stroke is not larger than Th2+y (No in step S74), then the process returns to step S70. If the steering control module 60 determines that the detected suspension stroke is larger than Th2+y (Yes in step S74), then the steering control module 60 sets the third coefficient kc to 1, and calculates the steering torque τs with equation (1) using the third coefficient kc (i.e., kc = 1) at the prescribed interval (step S76).

The steering control module 60 further determines whether the detected suspension stroke is smaller than Th2+γ (step S78). If the steering control module 60 determines that the detected suspension stroke is not smaller than Th2+γ (No in step S78), then the process returns to step S76. If the steering control module 60 determines that the detected suspension stroke is smaller than Th2+γ (Yes in step S78), then the steering control module 60 gradually decreases the third coefficient kc to 0, and calculates the steering torque is with equation (1) using the third coefficient kc at the prescribed interval (step S80).

The steering control module 60 further determines whether the detected suspension stroke is smaller than the second prescribed threshold Th2 (step S82). If the steering control module 60 determines that the detected suspension stroke is not smaller than the second prescribed threshold Th2 (No in step S82), then the process returns to step S78. If the steering control module 60 determines that the detected suspension stroke is smaller than the second prescribed threshold Th2 (Yes in step S82), then the steering control module 60 sets the third coefficient kc to 0, and calculates the steering torque is with equation (1) using the third coefficient kc (i.e., kc = 0) at the prescribed interval (step S84).

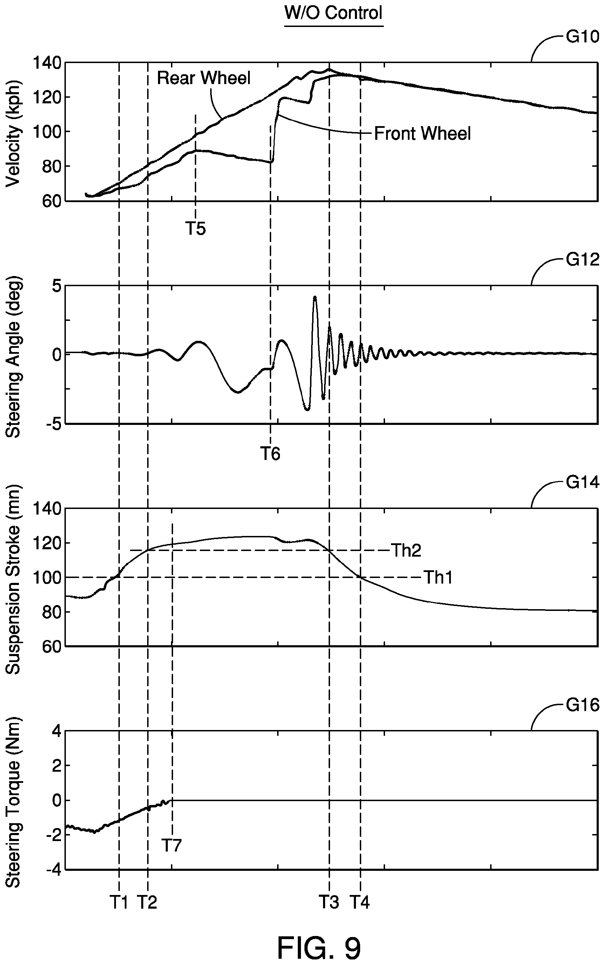

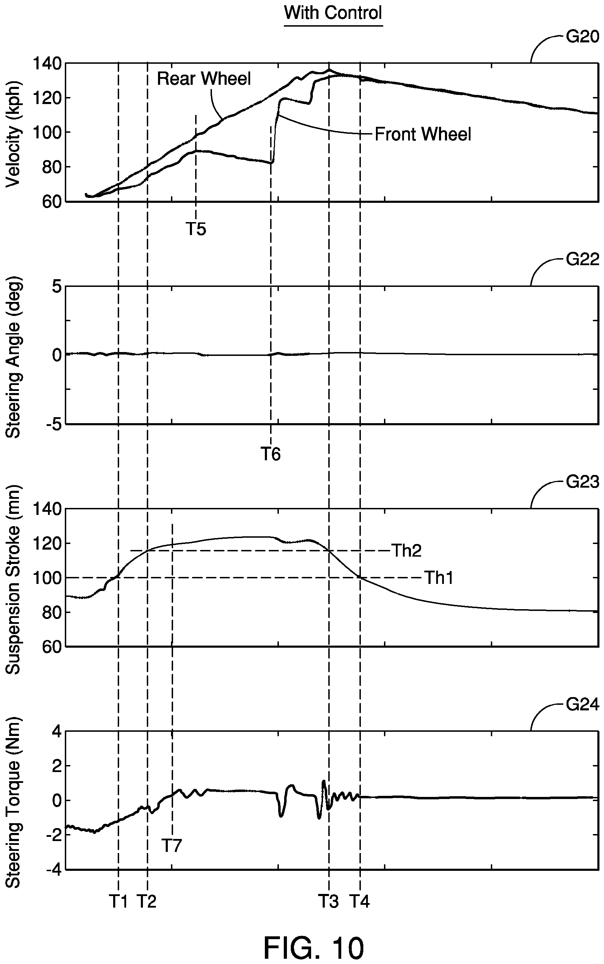

Referring now to Figures 9 and 10, simulation results of vehicle behaviors will be described.

Figure 9 illustrates vehicle behaviors of a vehicle of a comparative example (without the steering control of the present disclosure), while Figure 10 illustrates vehicle behaviors of a vehicle (e.g., the vehicle 10) of the present disclosure (with the steering control of the present disclosure). Specifically, Figure 9 illustrates a velocity-versus-time graph G10, a steering angle-versus-time graph G12, a suspension stroke-versus-time graph G14 and a steering torque-versus-time graph G16. Similarly, Figure 10 illustrates a velocity-versus-time graph G20, a steering angle-versus-time graph G22, a suspension stroke-versus-time graph G24 and a steering torque-versus-time graph G26. In each simulation, a steering angle of a front wheel of a vehicle is simulated using a mathematical model of the vehicle under the condition in which the vehicle follows an input velocity shown in the velocity-versus-time graphs G10 and G20 while maintaining the roll angle of the vehicle at 0 degrees.

Referring to Figures 9 and 10, the velocity-versus-time graphs G10 and G20 show velocity changes of front and rear wheels. As illustrated in the velocity-versus-time graphs G10 and G20, the vehicle is accelerated and then decelerated in the same manner while maintaining the roll angle of the vehicle at 0 degrees. As illustrated in the suspension stroke-versus-time graphs G14 and G24, due to the acceleration/deceleration shown in the velocity-versus-time graphs G10 and G20, the suspension stroke becomes larger than the first prescribed threshold Th1 at timing T1, and then becomes larger than the second prescribed threshold Th2 at timing T2. Furthermore, the suspension stroke becomes smaller than the second prescribed threshold Th2 at timing T3, and then becomes smaller than the first prescribed threshold Th1 at timing T4. Specifically, as illustrated in the velocity-versus-time graphs G10 and G20, the front wheel of the vehicle comes off the traveling surface of the ground GD at timing T5 (i.e., wheelie), and then contacts the traveling surface of the ground GD again at timing T6.

Furthermore, a steering torque applied to steer the front wheel of the vehicle is also simulated under the same condition in which the vehicle follows the input velocity shown in the velocity-versus-time graphs G10 and G20 while maintaining the roll angle of the vehicle at 0 degrees. Moreover, as illustrated in the steering torque-versus-time graph G16 in Figure 9, the steering torque applied to steer the front wheel of the comparative example after timing T7 is forced to be maintained at 0. In other words, no steering toque is applied to steer the front wheel of the vehicle of the comparative example after timing T7. On the other hand, as illustrated in the steering torque-versus-time graph G26 in Figure 10, the steering torque τs is applied to the front wheel according to the steering control of the present disclosure. In particular, during a period between timings T1 and T4, the steering damper torque τd is applied in addition to the steering operation torque rn. Also, during a period between timings T2 and T3, the steering adjustment torque τc is applied in addition to the steering damper torque τd.

As illustrated in the steering angle-versus-time graph G12 in Figure 9, without the steering control of the present disclosure, the steering oscillations occurs after the front wheel contacts the traveling surface of the ground GD at timing T6. On the other hand, as illustrated in the steering angle-versus-time graph G22 in Figure 10, with the steering control of the present disclosure, the steering oscillations does not occur after the front wheel contacts the traveling surface of the ground GD at timing T6, and the steering angle is kept at 0 degrees.

Accordingly, with the steering control of the present disclosure, the steering oscillations can be effectively suppressed. Specifically, it is difficult for a human driver to manually keep the steering angle at a prescribed steering angle during a wheelie. However, with the steering control of the present disclosure, the steering angle can be actively controlled to the prescribed steering angle $\delta c$ (e.g., 0 degrees) before the front wheel 16 touches the traveling surface of the ground GD while the front wheel 16 comes off the traveling surface of the ground GD. Thus, with the steering control of the present disclosure, the steering oscillations after a wheelie can be effectively minimized. Also, since the steering damper torque $\tau d$ can be generated by the steering actuator 36, there is no need to provide a special mechanical damper to the vehicle 10.

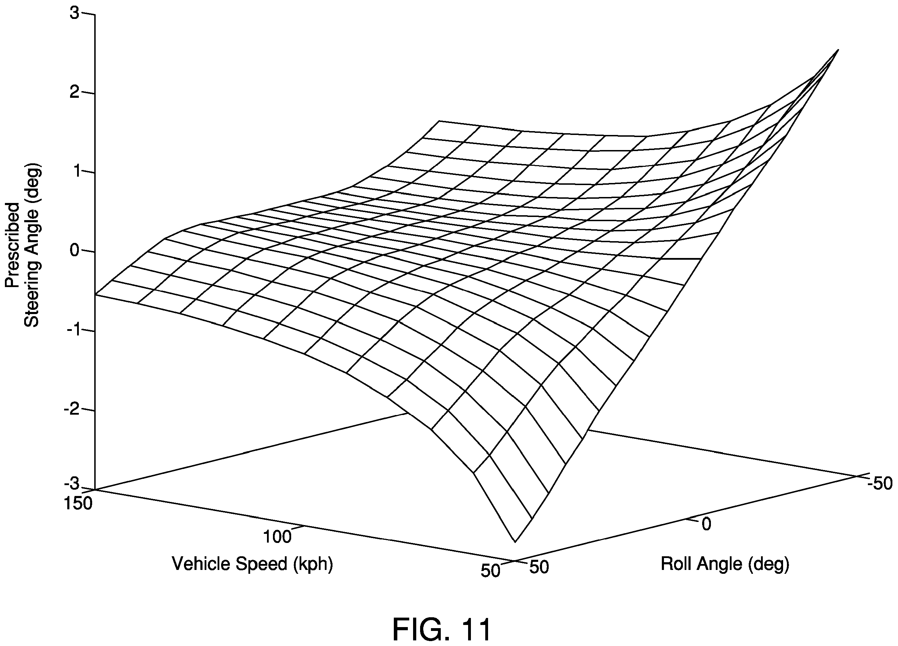

In the illustrated embodiment, in the steering angle adjustment mode, the steering angle of the front wheel 16 is controlled to the prescribed steering angle $\delta c$. Specifically, the prescribed steering angle $\delta c$ is a fixed value (0 degree). However, as illustrated in Figure 11, the prescribed steering angle $\delta c$ can be calculated based on the vehicle running states of the vehicle 10 detected by the running state detection sensor 52.

For example, the prescribed steering angle $\delta c$ can be a value based on at least one of the vehicle speed and the roll angle (e.g., the vehicle roll angle). The vehicle speed can be detected by the vehicle speed sensor of the running state detection sensor 52, for example. Also, the roll angle can be detected based on the angular velocity in the roll direction detected by the gyroscope of the running state detection sensor 52. In particular, as illustrated in Figure 11, the prescribed steering angle $\delta c$ can be determined as a function of the vehicle speed and the roll angle. For example, as illustrated in Figure 11, the prescribed steering angle $\delta c$ can be decreased as the roll angle increases at a given vehicle speed. In other words, the prescribed steering angle $\delta c$ can be set to an angle in which the front wheel 16 is steered rightward (i.e., the steering angle is negative) when the vehicle 10 leans rightward (i.e., the roll angle is positive) at a given vehicle speed, for example.

In the illustrated embodiment, as illustrated in Figure 2, the handlebar 20 is mechanically decoupled from the steering shaft 28 such that the steering operation of the handlebar 20 is not directly transmitted to the steering shaft 28 from the handlebar 20. However, the handlebar 20 can be mechanically coupled to the steering shaft 28 via a clutch mechanism.

Specifically, the clutch mechanism can be arranged between the handlebar shaft of the handlebar 20 and the steering shaft 28, and is operated by the vehicle ECU 50. In particular, while the vehicle 10 is operated in the normal steering mode and the steering damper mode (Figures 4 and 5), the steering control module 60 engages the clutch mechanism to mechanically transit the steering operation of the handlebar 20 to the steering shaft 28. On the other hand, while the vehicle 10 is operated in the steering angle adjustment mode (Figures 4 and 5), the steering control module 60 disengages the clutch mechanism not to mechanically transmit the steering operation of the handlebar 20 to the steering shaft 28.

More specifically, in the normal steering mode, the steering control module 60 operates the steering actuator 36 to generate the steering operation torque $\tau n$ according to the steering torque applied to the handlebar 20 to assist the steering operation of the handlebar 20 (i.e., a steering power assist system) (i.e., $\tau s = \tau n$). In this case, the total steering torque applied to the steering shaft 28 is the sum of the steering torque applied to the handlebar 20 and the steering operation torque $\tau n$. Of course, the steering control module 60 does not need to operate the steering actuator 36 to generate the steering operation torque $\tau n$ in the normal steering mode (i.e., $\tau s = 0$). In this case, the front wheel 16 is merely steered by the steering torque mechanically transmitted from the handlebar 20 in the normal steering mode.

Also, in the steering damper mode, the steering control module 60 operates the steering actuator 36 to generate the steering damper torque $\tau d$ in the above-mentioned manner. In this case, the steering control module 60 further operates the steering actuator 36 to generate the steering operation torque $\tau n$ according to the steering torque applied to the handlebar 20 (i.e., $\tau s = \tau n + \tau d$). Thus, in this case, the total steering torque applied to the steering shaft 28 is the sum of the steering torque applied to the handlebar 20, the steering operation torque $\tau n$ and the steering damper torque $\tau d$. Of course, as mentioned above, the steering control module 60 does not need to operate the steering actuator 36 to generate the steering operation torque $\tau n$ in the steering damper mode (i.e., $\tau s = \tau d$). In this case, the total steering torque applied to the steering shaft 28 is the sum of the steering torque applied to the handlebar 20 and the steering damper torque rd.

Furthermore, in the steering angle adjustment mode, the steering control module 60 disengages the clutch mechanism, thereby preventing the steering operation of the handlebar 20 from being directly transmitted to the steering shaft 28. In the steering angle adjustment mode, the steering control module 60 operates the steering actuator 36 to generate the steering damper torque $\tau d$ and the steering adjustment torque $\tau c$ (i.e., $\tau s = \tau d + \tau c$). In this case, the total steering torque applied to the steering shaft 28 is the sum of the steering damper torque $\tau d$ and the steering adjustment torque $\tau c$ since the steering torque applied to the handlebar 20 is not transmitted to the steering shaft 28.

In the illustrated embodiment, the vehicle 10 can further include an external vehicle actuator. The external vehicle actuator is formed as a humanoid or human-mimicking robot that resembles a human driver (rider). In this case, the external vehicle actuator is externally attached to the wheeled vehicle body 11 with little or no modification to the wheeled vehicle body 11. The external vehicle actuator physically operates at least the handlebar 20. Of course, the external vehicle actuator can further physically operate any other components of the wheeled vehicle body 11, such as the accelerator, the brake lever, the clutch lever, the brake pedal, and the shift pedal of the wheeled vehicle body 11, to autonomously drive the vehicle 10. With this configuration, the vehicle 10 can be utilized by switching an operation mode between an autonomous driven mode and a manual driven mode. In the autonomous driven mode, the external vehicle actuator is attached to the wheeled vehicle body 11, and autonomously drives the vehicle 10. In the manual driven mode, the external vehicle actuator is detached from the wheeled vehicle body 11, and a human driver manually drives the vehicle 10.

In the illustrated embodiment, the steering control module 60 of the vehicle ECU 50 can also be configured to autonomously operate the steering actuator 36. In this case, the steering control module 60 autonomously operates the steering actuator 36 to generate the steering torque $\tau$s to steer the front wheel 16 such that the vehicle 10 autonomously follows a prescribed target path. In other words, the vehicle 10 can have an internal steering operation apparatus including the steering actuator 36, and can be configured to steer the front wheel 16 based on an automatic steering operation signal according to the prescribed target path, for example.

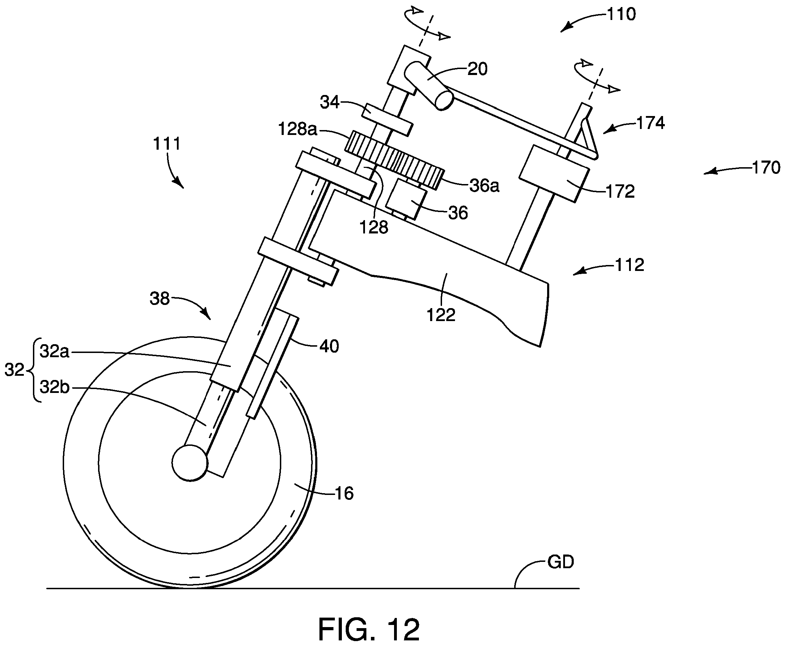

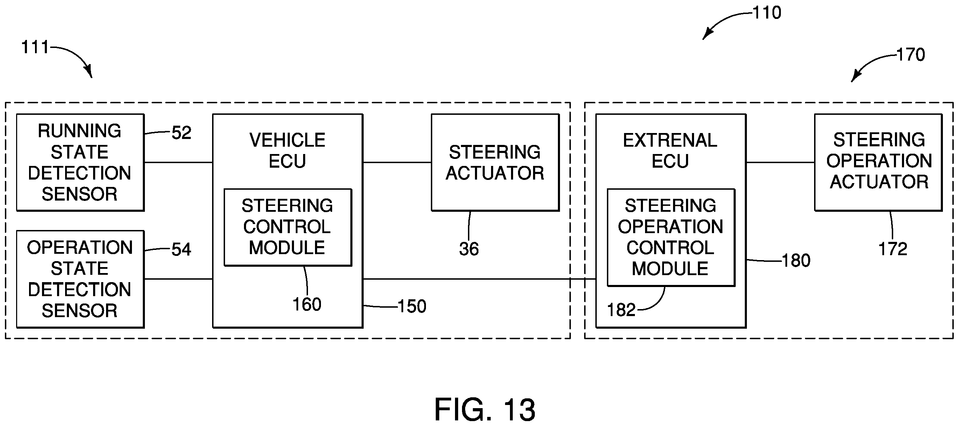

Referring now to Figures 12 and 13, a vehicle 110 in accordance with a modification example will be described. In view of the similarity between the vehicle 10 and the vehicle 110, the parts of the vehicle 110 that are identical to the parts of the vehicle 10 will be given the same reference numerals as the parts of the vehicle 10. Moreover, the descriptions of the parts of the vehicle 110 that are identical to the parts of the vehicle 10 may be omitted for the sake of brevity.

As illustrated in Figure 12, the vehicle 110 includes a wheeled vehicle body 111 and an external vehicle actuator 170. The wheeled vehicle body 111 is basically identical to the wheeled vehicle body 11 illustrated in Figure 2, except that the handlebar 20 is fixedly coupled to an upper part of a steering shaft 128 that is rotatably supported by a body frame 122 of a main body 112 of the wheeled vehicle body 111. Thus, the handlebar 20 is mechanically coupled to the front wheel 16 to steer the front wheel 16. As illustrated in Figure 12, the wheeled vehicle body 111 further has the steering actuator 36 that is fixedly coupled to the body frame 122 in a conventional manner. The steering actuator 36 rotates the output gear 36a that is meshed with an input gear 128a of the steering shaft 128 to transmit a rotational torque of the steering actuator 36 (i.e., a steering torque of the steering actuator 36) to the steering shaft 128, which steers the front wheel 16.

Although only schematically illustrated in Figure 12, the external vehicle actuator 170 is formed as a humanoid or human-mimicking robot that resembles a human driver (rider). The external vehicle actuator 170 is externally attached to the wheeled vehicle body 111 with little or no modification to the wheeled vehicle body 111. The external vehicle actuator 170 physically operates at least the handlebar 20. Specifically, as illustrated in Figure 12, the external vehicle actuator 170 includes a steering operation actuator 172 and a link mechanism 174. Although only schematically illustrated in Figure 12, the steering operation actuator 172 is fixedly attached to the main body 112 of the wheeled vehicle body 111 via a main body of the external vehicle actuator 170. The steering operation actuator 172 includes a servomotor that generates a rotational torque to physically steer the handlebar 20 via the link mechanism 174. In particular, an output shaft of the steering operation actuator 172 is mechanically coupled to the handlebar 20 via the link mechanism 174 to transmit the rotational torque from the steering operation actuator 172 to the handlebar 20. Of course, the external vehicle actuator 170 can further physically operate any other components of the wheeled vehicle body 111, such as the accelerator, the brake lever, the clutch lever, the brake pedal, and the shift pedal of the wheeled vehicle body 111, to autonomously drive the vehicle 110.

As illustrated in Figure 13, the external vehicle actuator 170 includes an external ECU (Electronic Control Unit) 180 as an electronic controller for controlling various components of the external vehicle actuator 170. Specifically, as understood in the motorcycle field, the external ECU 180 includes a microcomputer having one or more processors that execute one or more control programs for controlling the external vehicle actuator 170. The external ECU 180 can also include other conventional components such as an input interface circuit, an output interface circuit, and data/program storage devices such as a ROM (Read Only Memory) device and a RAM (Random Access Memory) device. The RAM and ROM store processing results and control programs that are run by the processor(s) of the external ECU 180. The external ECU 180 is operatively coupled to the components of the external vehicle actuator 170 as appropriate, in a conventional manner. It will be apparent to those skilled in the art from this disclosure that the precise structure and algorithms for the external ECU 180 can be any combination of hardware and software that will carry out the functions of the present invention.

As illustrated in Figure 13, the external ECU 180 is electrically coupled to a vehicle ECU 150 of the wheeled vehicle body 111. The vehicle ECU 150 includes a steering control module 160. The steering control module 160 is basically identical to the steering control module 60 of the vehicle ECU 50 of the vehicle 10. The external ECU 180 is interconnected to the vehicle ECU 150 through a vehicle bus, such as a CAN (Controller Area Network). With this configuration, the external ECU 180 can obtain various vehicle running states detected by the running state detection sensor 52 and various vehicle operation states detected by the operation state detection sensor 54 from the vehicle ECU 150. The external ECU 180 includes a steering operation control module 182. The steering operation control module 182 operates the steering operation actuator 172 to steer the handlebar 20 via the link mechanism 174 based on the various vehicle running states and the various vehicle operation states.

In the illustrated embodiment, the steering operation control module 182 of the external ECU 180 operates the steering operation actuator 172 to generate the rotational torque to steer the handlebar 20 such that the vehicle 110 autonomously follow a prescribed target path, for example. Thus, the handlebar 20 is configured to be operated by the external vehicle actuator 170 to steer the front wheel 16 based on an automatic steering operation signal according to the prescribed target path, for example. Thus, the vehicle 110 has the external vehicle actuator 170 (e.g., the external steering operation apparatus) that is configured to operate the handlebar 20 to steer the front wheel 16 based on the automatic steering operation signal.

In this case, while the vehicle 110 is operated in the normal steering mode (Figures 4 and 5), the steering control module 160 of the vehicle ECU 150 operates the steering actuator 36 to generate the steering operation torque $\tau n$ according to the steering torque applied to the handlebar 20 by the external vehicle actuator 170 (i.e., a steering power assist system) (i.e., $\tau s = \tau n$). In this case, the total steering torque applied to the steering shaft 128 is the sum of the steering torque applied to the handlebar 20 by the external vehicle actuator 170 and the steering operation torque $\tau n$. Thus, in the illustrated embodiment, the vehicle ECU 150 is configured to generate the steering operation torque $\tau n$ (e.g., steering assist torque) to the front wheel 16 using the steering actuator 36 based on the steering operation of the handlebar 20. Of course, the steering control module 160 does not need to operate the steering actuator 36 to generate the steering operation torque $\tau n$ in the normal steering mode (i.e., $\tau s = 0$). In this case, the front wheel 16 is merely steered by the steering torque applied to the handlebar 20 by the external vehicle actuator 170 in the normal steering mode.

Also, while the vehicle 110 is operated in the steering damper mode (Figures 4 and 5), the steering control module 160 operates the steering actuator 36 to generate the steering damper torque $\tau d$ in the above-mentioned manner. In this case, the steering control module 160 further operates the steering actuator 36 to generate the steering operation torque $\tau n$ according to the steering torque applied to the handlebar 20 by the external vehicle actuator 170 (i.e., is = $\tau n + \tau d$). Thus, in this case, the total steering torque applied to the steering shaft 128 is the sum of the steering torque applied to the handlebar 20 by the external vehicle actuator 170, the steering operation torque $\tau n$ and the steering damper torque $\tau d$. Of course, as mentioned above, the steering control module 160 does not need to operate the steering actuator 36 to generate the steering operation torque $\tau n$ in the steering damper mode (i.e., $\tau s = \tau d$). In this case, the total steering torque applied to the steering shaft 128 is the sum of the steering torque applied to the handlebar 20 by the external vehicle actuator 170 and the steering damper torque $\tau d$.

Furthermore, while the vehicle 110 is operated in the steering angle adjustment mode (Figures 4 and 5), the external vehicle actuator 170 operates the steering operation actuator 172 such that no steering torque is applied to the handlebar 20 by the external vehicle actuator 170. In response, the steering control module 160 generates no steering operation torque $\tau n$ using the steering actuator 36. Thus, without calculation of the first coefficient kn (Figure 7), the influence of the steering operation torque $\tau n$ in the steering torque $\tau s$ can be changed. Specifically, the steering operation torque $\tau n$ can be decreased to 0 in the steering angle adjustment mode. On the other hand, in the steering angle adjustment mode, the steering control module 160 operates the steering actuator 36 to generate the steering damper torque $\tau d$ and the steering adjustment torque $\tau c$ (i.e., $\tau s = \tau d + \tau c$). Thus, in this case, the total steering torque applied to the steering shaft 128 is the sum of the steering damper torque $\tau d$ and the steering adjustment torque $\tau c$ since no steering torque is applied to the handlebar 20 by the external vehicle actuator 170.

Accordingly, with the external vehicle actuator 170, the influence of the steering operation torque $\tau n$ in the steering torque $\tau s$ can be adjusted by adjusting the steering torque applied to the handlebar 20. In the illustrated embodiment, the steering operation actuator 172 of the external vehicle actuator 170 generates the steering torque applied to the handlebar 20 for adjusting the influence of the steering operation torque $\tau n$ in the steering torque $\tau s$. However, the steering operation actuator 172 of the external vehicle actuator 170 can also generate the steering torque applied to the handlebar 20 for adjusting the influence of the steering damper torque $\tau d$ and/or the steering adjustment torque $\tau c$ in the steering torque $\tau s$. In this case, once the total steering torque applied to the steering shaft 128 is determined by the steering control module 160 or the steering operation control module 182, then the steering actuator 36 of the wheeled vehicle body 111 and the steering operation actuator 172 of the external vehicle actuator 170 can further be operated to generate the total steering torque applied to the steering shaft 128 in cooperation with each other. More specifically, once the total steering torque applied to the steering shaft 128 is determined, then the steering actuator 36 of the wheeled vehicle body 111 is operated to generate the steering torque $\tau s$, which is a part of the total steering torque applied to the steering shaft 128, while the steering operation actuator 172 of the external vehicle actuator 170 is operated to generate the remainder of the total steering torque applied to the steering shaft 128 (i.e., the "total steering torque" - the "steering torque τs"). In other words, in the illustrated embodiment, the steering operation actuator 172 of the external vehicle actuator 170 is operated to generate a steering torque applied to the steering shaft 128 through the handlebar 20 that corresponds to any one of the combinations, including the steering adjustment torque τc, of the steering operation torque τn, the steering damper torque τd and the steering adjustment torque τc for performing the steering control of the present disclosure. In this case, the steering actuator 36 of the wheeled vehicle body 111 is operated to generate the remainder of the total steering torque applied to the steering shaft 128.

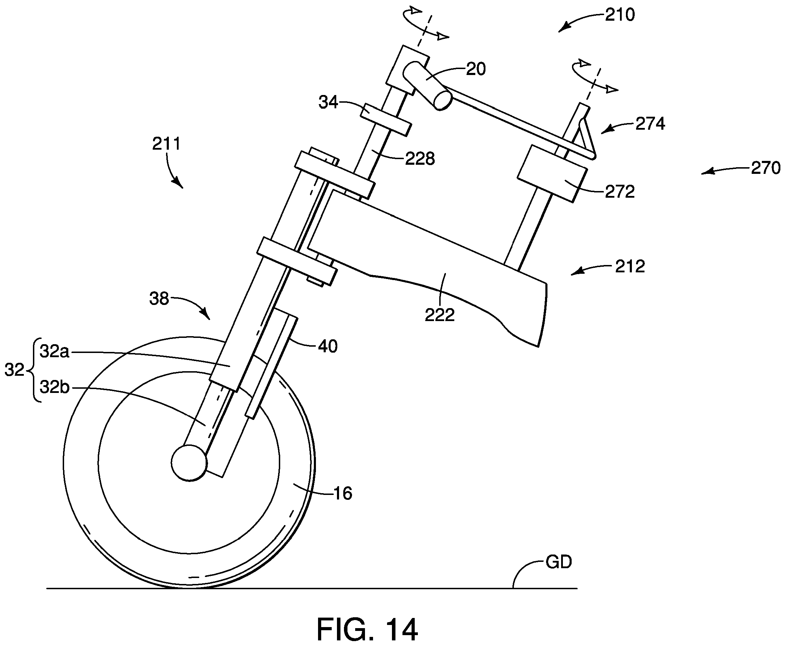

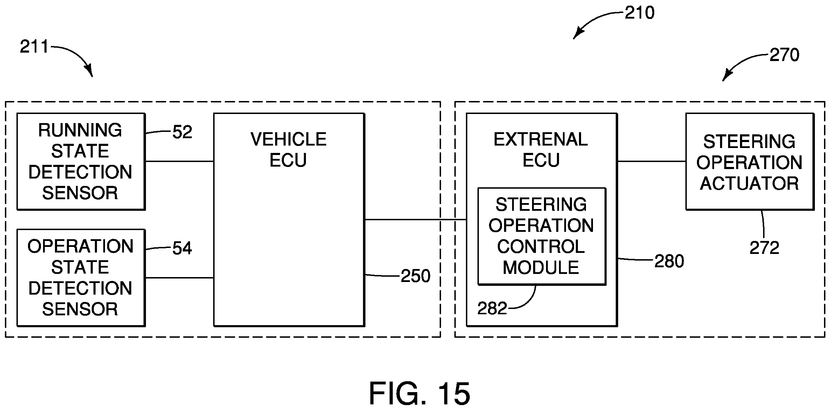

Referring further to Figures 14 and 15, a vehicle 210 in accordance with another modification example will be described. In view of the similarity between the vehicles 10, 110 and 210, the parts of the vehicle 210 that are identical to the parts of the vehicles 10 and 110 will be given the same reference numerals as the parts of the vehicles 10 and 110. Moreover, the descriptions of the parts of the vehicle 210 that are identical to the parts of the vehicles 10 and 110 may be omitted for the sake of brevity.

As illustrated in Figure 14, the vehicle 210 includes a wheeled vehicle body 211 and an external vehicle actuator 270. The wheeled vehicle body 211 is basically identical to the wheeled vehicle body 111 illustrated in Figure 12, except that the wheeled vehicle body 211 has no steering actuator. As illustrated in Figure 14, the handlebar 20 is fixedly coupled to an upper part of a steering shaft 228 that is rotatably supported by a body frame 222 of a main body 212 of the wheeled vehicle body 211.

The external vehicle actuator 270 is also basically identical to the external vehicle actuator 170. As illustrated in Figure 14, the external vehicle actuator 270 includes a steering operation actuator 272 and a link mechanism 274. Although only schematically illustrated in Figure 14, the steering operation actuator 272 is fixedly attached to the main body 212 of the wheeled vehicle body 211 via a main body of the external vehicle actuator 270. The steering operation actuator 272 includes a servomotor that generates a rotational torque to physically steer the handlebar 20 via the link mechanism 274. In particular, an output shaft of the steering operation actuator 272 is mechanically coupled to the handlebar 20 via the link mechanism 274 to transmit the rotational torque from the steering operation actuator 272 to the handlebar 20. Of course, the external vehicle actuator 270 can further physically operate any other components of the wheeled vehicle body 211, such as the accelerator, the brake lever, the clutch lever, the brake pedal, and the shift pedal of the wheeled vehicle body 211, to autonomously drive the vehicle 210.

As illustrated in Figure 15, the external vehicle actuator 270 includes an external ECU (Electronic Control Unit) 280 as an electronic controller for controlling various components of the external vehicle actuator 270. The external ECU 280 is basically identical to the external ECU 180, and thus detailed description will be omitted for the sake of brevity.

As illustrated in Figure 15, the external ECU 280 is electrically coupled to a vehicle ECU 250 of the wheeled vehicle body 211. The external ECU 280 is interconnected to the vehicle ECU 250 through a vehicle bus, such as a CAN (Controller Area Network). With this configuration, the external ECU 280 can obtains various vehicle running states detected by the running state detection sensor 52 and various vehicle operation states detected by the operation state detection sensor 54 from the vehicle ECU 250. The external ECU 280 includes a steering operation control module 282. The steering operation control module 282 operates the steering operation actuator 272 to steer the handlebar 20 based on the various vehicle running states and the various vehicle operation states.

In the illustrated embodiment, the steering operation control module 282 of the external ECU 280 operates the steering operation actuator 272 to generate the rotational torque to steer the handlebar 20 such that the vehicle 210 autonomously follow a prescribed target path, for example. Furthermore, the steering operation control module 282 of the external ECU 280 operates the steering operation actuator 272 such that a steering torque τs can be applied to the steering shaft 228 of the vehicle 210 in the same manner as the steering control of the vehicle 10 (Figures 4 and 5). Specifically, the steering operation control module 282 operates the steering operation actuator 272 to apply the steering torque τs that is the same torque as the steering torque τs applied to the steering shaft 28 by the steering actuator 36 for the steering control of the vehicle 10. Since the steering torque τs applied to the steering shaft 228 during the steering control of the vehicle 210 is the same as the steering torque is applied to the steering shaft 28 during the steering control of the vehicle 10, the detailed description will be omitted for the sake of brevity.

Accordingly, the steering control of the vehicle 210, which is the same as the steering control of the vehicle 10 performed by applying the steering torque τs to the steering shaft 28, can also be performed by applying the same steering torque τs using the external vehicle actuator 270.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. Unless otherwise defined, all terms (including technical and scientific terms) used herein have the same meaning as commonly understood by one of ordinary skill in the art to which illustrative embodiments of the inventive concepts belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. As used herein the term "and/or" includes any and all combinations of one or more of the associated listed items. Additionally, similar words used to describe the relationship between elements or layers should be interpreted in a like fashion (e.g., "between" versus "directly between", "above" versus "directly above", "below" versus "directly below", "adjacent" versus "directly adjacent," "on" versus "directly on"). Thus, components that are shown directly connected or contacting each other can have intermediate structures disposed between them unless specified otherwise.

Spatially relative terms, such as "forward", "rearward", "above", "below", "beneath", "downward", "vertical", "horizontal", and "transverse" as well as any other similar spatial terms may be used herein for the ease of description to describe one element or feature's relationship to another element(s) or feature(s) of the above embodiments. These terms, as utilized to describe the present invention should be interpreted relative to a vehicle on a horizontal surface.

While only a selected embodiment has been chosen to illustrate the present invention, it will be apparent to those skilled in the art from this disclosure that various changes and modifications can be made herein without departing from the scope of the invention as defined in the appended claims. The structures and functions of one embodiment can be adopted in another embodiment. It is not necessary for all advantages to be present in a particular embodiment at the same time. Thus, the foregoing descriptions of the embodiments according to the present invention are provided for illustration only, and not for the purpose of limiting the invention as defined by the appended claims.

**Claims**

1. A motor vehicle (10, 110, 210) comprising:

    a main body (12, 112, 212);

    a steerable wheel (16) coupled to the main body (12, 112, 212) via a suspension (38);
    a steering (20) turnably coupled to the main body (12, 112, 212) to steer the steerable wheel (16);
    a steering actuator (36, 172, 272) configured to change a steering angle of the steerable wheel (16); and
    an electronic controller (60, 160, 182, 282), wherein the electronic controller (60, 160, 182, 282) is configured to control the steering angle to a prescribed steering angle ($\delta$c) using the steering actuator (36, 172, 272) upon determining a reduced contact of the steerable wheel with a traveling surface with respect to a first prescribed threshold (Th2), **characterized in that** the electronic controller (60, 160, 182, 282) is further configured to generate steering damper torque ($\tau$d) to the steerable wheel (16) using the steering actuator (36, 172, 272) upon determining a reduced contact of the steerable wheel (16) with the traveling surface with respect to a second prescribed threshold (Th1), and the first prescribed threshold (Th2) is indicative of less contact of the steerable wheel (16) with the traveling surface with respect to the second prescribed threshold (Th1).

2. The motor vehicle (10, 110, 210) according to claim 1, wherein
the prescribed steering angle ($\delta$c) has a fixed value.

3. The motor vehicle (10, 110, 210) according to claim 2, wherein
the fixed value is zero.

4. The motor vehicle (10, 110, 210) according to claim 1, wherein
the prescribed steering angle ($\delta$c) is a value based on at least one of a vehicle speed and a vehicle roll angle.

5. The motor vehicle (10, 110, 210) according to any of claims 1 to 4, wherein
the second prescribed threshold (Th1) is less than the first prescribed threshold (Th2).

6. The motor vehicle (10, 110, 210) according to any one of claims 1 to 5, wherein
the electronic controller (60, 160, 182, 282) is further configured to generate steering operation torque ($\tau$n) to the steerable wheel (16) using the steering actuator (36, 172, 272) based on a steering operation of the steering (20).

7. The motor vehicle (110, 210) according to any one of claims 1 to 6, wherein
the steering (20) is mechanically coupled to the steerable wheel (16) to steer the steerable wheel

**8.** The motor vehicle (110, 210) according to claim 7, wherein

the electronic controller (160, 282) is further configured to generate steering assist torque to the steerable wheel (16) using the steering actuator (36, 272) based on a steering operation of the steering (20).

**9.** The motor vehicle (10, 110, 210) according to any one of claims 1 to 8, further comprising

a stroke sensor (40) configured to detect a suspension stroke of the suspension (38).

**10.** The motor vehicle (10, 110, 210) according to any one of claims 1 to 9, wherein

the steering (20) is configured to be operated to steer the steerable wheel (16) based on an automatic steering operation signal.

**11.** The motor vehicle (10, 110, 210) according to claim 10, further comprising

an internal steering operation apparatus including the steering actuator (36), the internal steering operation apparatus configured to steer the steerable wheel (16) based on the automatic steering operation signal or further comprising

an external steering operation apparatus (170, 270) configured to operate the steering (20) to steer the steerable wheel (16) based on the automatic steering operation signal.

**12.** The motor vehicle (10, 110, 210) according to any one of claims 1 to 11, wherein the steering (20) includes a handlebar, and

the steerable wheel (16) is a single wheel mounted to the main body via a fork (32).


**Patentansprüche**

**1.** Ein Kraftfahrzeug (10, 110, 210), umfassend:

einen Hauptkörper (12, 112, 212);
ein lenkbares Rad (16), das an den Hauptkörper (12, 112, 212) über eine Aufhängung (38) gekoppelt ist;
eine Lenkung (20), die drehbar an den Hauptkörper (12, 112, 212) gekoppelt ist, um das lenkbare Rad (16) zu lenken;
einen Lenkaktuator (36, 172, 272), der konfiguriert ist, einen Lenkwinkel des lenkbaren Rades (16) zu ändern; und
einen elektronischen Controller (60, 160, 182, 282),
wobei der elektronische Controller (60, 160, 182, 282) konfiguriert ist, den Lenkwinkel auf einen vorgeschriebenen Lenkwinkel ($\delta$c) durch

Benutzen des Lenkaktuators (36, 172, 272) bei Feststellung eines reduzierten Kontakts des lenkbaren Rades mit einer Fahrtoberfläche bezüglich eines ersten vorgeschriebenen Schwellwertes (Th2) zu steuern,

**dadurch gekennzeichnet, dass**

der elektronische Controller (60, 160, 182, 282) weiterhin konfiguriert ist, Lenkdämpfungsmoment ($\tau$d) auf das lenkbare Rad (16) durch Benutzen des Lenkaktuators (36, 172, 272) bei Feststellung eines reduzierten Kontakts des lenkbaren Rades (16) mit der Fahrtoberfläche bezüglich eines zweiten vorgeschriebenen Schwellwertes (Th1) zu erzeugen, und

der erste vorgeschriebene Schwellwert (Th2) weniger Kontakt des lenkbaren Rades (16) mit der Fahrtoberfläche gegenüber dem zweiten vorgeschriebenen Schwellwert (Th1) anzeigt.

**2.** Das Kraftfahrzeug (10, 110, 210) nach Anspruch 1, wobei

der vorgeschriebene Lenkwinkel ($\delta$c) einen festen Wert aufweist.

**3.** Das Kraftfahrzeug (10, 110, 210) nach Anspruch 2, wobei der feste Wert Null ist.

**4.** Das Kraftfahrzeug (10, 110, 210) nach Anspruch 1, wobei

der vorgeschriebene Lenkwinkel ($\delta$c) ein Wert basierend auf zumindest einem von einer Fahrzeuggeschwindigkeit und einem Fahrzeugrollwinkel ist.

**5.** Das Kraftfahrzeug (10, 110, 210) nach irgendeinem von Ansprüchen 1 bis 4, wobei der zweite vorgeschriebene Schwellwert (Th1) geringer ist als der erste vorgeschriebene Schwellwert (Th2).

**6.** Das Kraftfahrzeug (10, 110, 210) nach irgendeinem von Ansprüchen 1 bis 5, wobei der elektronische Controller (60, 160, 182, 282) weiterhin konfiguriert ist, Lenkoperationsmoment ($\tau$n) auf das lenkbare Rad (16) durch Benutzen des Lenkaktuators (36, 172, 272) basierend auf einer Lenkoperation der Lenkung (20) zu erzeugen.

**7.** Das Kraftfahrzeug (110, 210) nach irgendeinem von Ansprüchen 1 bis 6, wobei die Lenkung (20) mechanisch an das lenkbare Rad (16) gekoppelt ist, um das lenkbare Rad (16) zu lenken.

**8.** Das Kraftfahrzeug (110, 210) nach Anspruch 7, wobei

der elektronische Controller (160, 282) weiterhin konfiguriert ist, Lenkassistenzmoment auf das lenkbare Rad (16) durch Benutzen des Lenkaktuators (36, 272) basierend auf einer Lenkoperation der Lenkung (20) zu erzeugen.

9. Das Kraftfahrzeug (10, 110, 210) nach irgendeinem von Ansprüchen 1 bis 8, weiterhin umfassend einen Hubsensor (40), der konfiguriert ist, einen Aufhängungshub der Aufhängung (38) zu detektieren.

10. Das Kraftfahrzeug (10, 110, 210) nach irgendeinem von Ansprüchen 1 bis 9, wobei die Lenkung (20) konfiguriert ist, betrieben zu werden, um das lenkbare Rad (16) basierend auf einem automatischen Lenkoperationssignal zu lenken.

11. Das Kraftfahrzeug (10, 110, 210) nach Anspruch 10, weiterhin umfassend
eine interne Lenkoperationsvorrichtung, die den Lenkaktuator (36) beinhaltet, wobei die interne Lenkoperationsvorrichtung konfiguriert ist, das lenkbare Rad (16) basierend auf dem automatischen Lenkoperationssignal zu lenken, oder weiterhin umfassend eine externe Lenkoperationsvorrichtung (170, 270), die konfiguriert ist, die Lenkung (20) zu betreiben, um das lenkbare Rad (16) basierend auf dem automatischen Lenkoperationssignal zu lenken.

12. Das Kraftfahrzeug (10, 110, 210) nach irgendeinem von Ansprüchen 1 bis 11, wobei die Lenkung (20) eine Griffstange beinhaltet, und
das lenkbare Rad (16) ein einzelnes Rad ist, das an dem Hauptkörper über eine Gabel (32) montiert ist.

## Revendications

1. Véhicule automobile (10, 110, 210) comprenant :

un corps principal (12, 112, 212) ;
une roue orientable (16) couplée au corps principal (12, 112, 212) par l'intermédiaire d'une suspension (38) ;
une direction (20) couplée en rotation au corps principal (12, 112, 212) pour diriger la roue orientable (16) ;
un actionneur de direction (36, 172, 272) configuré pour changer un angle de braquage de la roue orientable (16) ; et
un dispositif de commande électronique (60, 160, 182, 282), dans lequel le dispositif de commande électronique (60, 160, 182, 282) est configuré pour régler l'angle de braquage à un angle de braquage prescrit ($\delta$c) en utilisant l'actionneur de direction (36, 172, 272) lors de la détermination d'un contact réduit de la roue orientable avec une surface de déplacement par rapport à un premier seuil prescrit (Th2), **caractérisé en ce que**
le dispositif de commande électronique (60, 160, 182, 282) est en outre configuré pour générer un couple d'amortisseur de direction ($\tau$d) à la roue orientable (16) en utilisant l'actionneur de direction (36, 172, 272) lors de la détermination d'un contact réduit de la roue orientable (16) avec la surface de déplacement par rapport à un deuxième seuil prescrit (Th1), et
le premier seuil prescrit (Th2) indique un contact plus réduit de la roue orientable (16) avec la surface de déplacement par rapport au deuxième seuil prescrit (Th1).

2. Véhicule automobile (10, 110, 210) selon la revendication 1, dans lequel l'angle de braquage prescrit ($\delta$c) a une valeur fixe.

3. Véhicule automobile (10, 110, 210) selon la revendication 2, dans lequel la valeur fixe est égale à zéro.

4. Véhicule automobile (10, 110, 210) selon la revendication 1, dans lequel
l'angle de braquage prescrit ($\delta$c) est une valeur basée sur au moins l'un(e) parmi une vitesse du véhicule et un angle de roulis du véhicule.

5. Véhicule automobile (10, 110, 210) selon l'une des revendications 1 à 4, dans lequel
le deuxième seuil prescrit (Th1) est inférieur au premier seuil prescrit (Th2).

6. Véhicule automobile (10, 110, 210) selon l'une quelconque des revendications 1 à 5, dans lequel
le dispositif de commande électronique (60, 160, 182, 282) est en outre configuré pour générer un couple d'actionnement de direction ($\tau$n) à la roue orientable (16) en utilisant l'actionneur de direction (36, 172, 272) sur la base d'un actionnement de direction de la direction (20).

7. Véhicule automobile (110, 210) selon l'une quelconque des revendications 1 à 6, dans lequel
la direction (20) est couplée mécaniquement à la roue orientable (16) pour diriger la roue orientable (16).

8. Véhicule automobile (110, 210) selon la revendication 7, dans lequel
le dispositif de commande électronique (160, 282) est en outre configuré pour générer un couple d'assistance à la direction à la roue orientable (16) en utilisant l'actionneur de direction (36, 272) sur la base d'un actionnement de direction de la direction (20).

9. Véhicule automobile (10, 110, 210) selon l'une quelconque des revendications 1 à 8, comprenant en outre
un capteur de course (40) configuré pour détecter une course de suspension de la suspension (38).

10. Véhicule automobile (10, 110, 210) selon l'une quelconque des revendications 1 à 9, dans lequel la direction (20) est configurée pour être actionnée pour diriger la roue orientable (16) sur la base d'un signal d'actionnement de direction automatique.

11. Véhicule automobile (10, 110, 210) selon la revendication 10, comprenant en outre un appareil d'actionnement de direction interne comportant l'actionneur de direction (36), l'appareil d'actionnement de direction interne étant configuré pour diriger la roue orientable (16) sur la base du signal d'actionnement de direction automatique ou comprenant en outre un appareil d'actionnement de direction externe (170, 270) configuré pour actionner la direction (20) pour diriger la roue orientable (16) sur la base du signal d'actionnement de direction automatique.

12. Véhicule automobile (10, 110, 210) selon l'une quelconque des revendications 1 à 11, dans lequel la direction (20) comporte un guidon, et la roue orientable (16) est une roue unique montée sur le corps principal par l'intermédiaire d'une fourche (32).

FIG. 1

EP 3 508 409 B1

FIG. 2

EP 3 508 409 B1

## FIG. 3

```
52 ── RUNNING STATE          50 ──┐ VEHICLE ECU              STEERING
       DETECTION SENSOR                                      ACTUATOR ──11

                                                                    ──36

54 ── OPERATION STATE               STEERING            ── 60
       DETECTION SENSOR             CONTROL MODULE
```

RUNNING STATE DETECTION SENSOR

OPERATION STATE DETECTION SENSOR

VEHICLE ECU

STEERING CONTROL MODULE

STEERING ACTUATOR

**FIG. 3**

START

S12 — SUSPENSION STROKE >Th1?

YES → S16 — SUSPENSION STROKE >Th2?

YES → S20 — STEERING ANGLE ADJUSTMENT MODE

NO → S14 — NORMAL STEERING MODE

NO → S18 — STEERING DAMPER MODE

END

**FIG. 4**

FIG. 5

Start

S30

Suspension
Stroke > Th1?

No

Yes

S32

Gradually Increase Kd

S34

No

Suspension
Stroke > Th1 +α?

Yes

S36

Kd = 1

S38

Suspension
Stroke < Th1 +α?

No

Yes

S40

Gradually Decrease Kd

S42

No

Suspension
Stroke < Th1?

Yes

S44

Kd = 0

End

# FIG. 6

FIG. 7

```
                    ┌──────────┐
                    │  Start   │
                    └────┬─────┘
                         │
                         ▼            S70
                    ╱─────────────╲
      ┌────────────╱  Suspension   ╲      No
      │            ╲  Stroke > Th2? ╱──────────┐
      │             ╲─────────────╱            │
      │                   │ Yes               │
      │                   ▼         S72        │
      │            ┌──────────────────┐        │
      │            │Gradually Increase│        │
      │            │        Kc        │        │
      │            └────────┬─────────┘        │
      │                     │        S74       │
      │              ╱──────────────╲          │
      │  No         ╱  Suspension    ╲         │
      └────────────╱ Stroke > Th2 + γ?╲        │
                   ╲                  ╱         │
                    ╲────────────────╱         │
             S76           │ Yes               │
              ┌────────────┼──────────────┐    │
              ▼            ▼               │    │
         ┌──────────────────┐             │    │
         │     Kc = 1       │             │    │
         └────────┬─────────┘             │    │
      ┌───────────│                       │    │
      │           ▼          S78          │    │
      │     ╱──────────────╲              │    │
      │    ╱  Suspension    ╲     No       │    │
      │    ╲ Stroke < Th2 + γ?╲───────────┘    │
      │    ╲                 ╱                  │
      │     ╲───────────────╱                  │
      │ S80        │ Yes                        │
      │  ┌─────────┼────────┐                   │
      │  ▼         ▼        │                   │
      │ ┌──────────────────┐                    │
      │ │Gradually Decrease│                    │
      │ │       Kc         │                    │
      │ └────────┬─────────┘                    │
      │          │        S82                   │
      │   ╱──────────────╲                      │
      │  ╱  Suspension    ╲    No               │
      └─╱  Stroke < Th2?   ╲─────────           │
        ╲                 ╱                     │
         ╲───────────────╱                      │
    S84         │ Yes ◄──────────────────────────┘
     ┌──────────┼────────┐
     ▼          ▼        │
    ┌──────────────────┐
    │     Kc = 0       │
    └────────┬─────────┘
             │
             ▼
        ┌──────────┐
        │   End    │
        └──────────┘
```

## FIG. 8

## W/O Control

FIG. 9

## With Control

FIG. 10

FIG. 11

FIG. 12

EP 3 508 409 B1

FIG. 13

EP 3 508 409 B1

FIG. 14

EP 3 508 409 B1

FIG. 15

**EP 3 508 409 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014114546 A1
- JP 2005349927 A
- US 2013066522 A1
- DE 102012101277 A1
- DE 102012101281 A1